# EUROPEAN PATENT APPLICATION

(11) **EP 1 932 632 A2**
(43) Date of publication of application: **18.06.2008**
(21) Application number: 07023054.5
(22) Date of filing: 28.11.2007
(51) Int. Cl.: B25J 19/00, H04N 5/74

(54) **Video reproducing apparatus**

(30) Priority: 01.12.2006 JP 2006326382
(71) Applicant: NIKKO Co., Ltd., Tokyo (JP)
(72) Inventor: Mukaida, Kenji, Katsushika-ku, Tokyo (JP); Maeda, Yoichi, Katsushika-ku, Tokyo (JP); Kagaya, Yasuo, Katsushika-ku, Tokyo (JP)
(74) Representative: Lusuardi, Werther

(57) **Abstract**

To provide a video reproducing apparatus in which video reproduction and video display can be integrated into one to freely make projection in an arbitrary direction at an arbitrary position and which can be operated by eliminating the danger in advance at the time of determining the optimum position.

A video reproducing apparatus which comprises a radio control signal receiving portion, a video sound data reproducing portion connected to the radio control signal receiving portion, a video projection portion connected to the radio control signal receiving portion and the video sound data reproducing portion, speakers connected to the video sound data reproducing portion, a housing for accommodating the video sound data reproducing portion, the video projection portion, and the speakers, and a housing drive portion for moving the housing, and which drives the housing according to a control signal of the housing drive portion which controls the housing drive portion and which is received by the radio control signal receiving portion, projects the video sound data onto the video projection portion according to a control signal of the video sound data reproducing portion at an arbitrary position, and reproduces the data through the speakers.

## Description

### Technical Field

The present invention relates to a video reproducing apparatus and, more particularly, to a video reproducing apparatus which can be freely and remotely arranged to the optimum point for viewing.

### Background Art

A system for enjoying a movie at home is collectively called a home theater. Starting with an 8 mm movie projector in the past, reproduction can be easily made by the arrival of a VHS video and the volume of a medium is significantly reduced by the arrival of a Digital Versatile Disc (DVD). On the other hand, a video display has changed in such a way that the thickness is dramatically thinned by the arrival of a liquid crystal television or a plasma television starting with the arrival of a CRT-based television.

Japanese laid-open Patent Publication No. 2005-328481 discloses the invention of a projector in which the reproduction function of a DVD and a light source are integrated into one as an apparatus for making them described above further compact. The projector has the advantage that the integration automates various settings to reduce the burden of a user.

On the other hand, Japanese laid-open Patent Publication No. 2005-46926 discloses the invention in which a projector is mounted on one of a plurality of robots and a DVD is mounted on the other one and in which the DVD is reproduced by the communication with each other and projected by the projector. The invention has the effect that the cost per one robot can be reduced because a plurality of functions are not mounted on the robot.

### Disclosure Of The Invention

However, the DVD integrated type projector shown in the Patent Document 1 requires the creativity on the user side from the diversification of the current needs although the position of capturing can be varied depending on the setting of the projector. As its common usage, a subject is often projected on one wall surface indoor or a screen to reproduce it. If the projection direction is devised, it is necessary to consider a method for supporting the projector each time.

On the other hand, in the Patent Document 2 in that respect, a home theater system in which, when the user gives an instruction to see a movie at a home theater to "an autonomous robot," the autonomous robot guides and moves "a driven robot" to the user and optimally arranges the driven robot around the user is provided to the user.

However, in order to truly optimize the optimum arrangement of the "autonomous robot," it is necessary to give a detailed instruction each time or to make programming in advance since only the instruction to see a movie at the home theater is not sufficient, thus requiring troublesome work.

In addition, when the projector is freely moved, it is necessary to secure the safety. More specifically, a careless-looking through a light source can cause injury to the eyes. When the projector is self-propelled, contact interference with a step height or an obstacle can cause a fall or damage of a mobile projector. Furthermore, when various devices are mounted on the projector and driven, the safety can be damaged.

Hence, an object of the present invention is to provide a video reproducing apparatus in which video reproduction and video display can be integrated into one to freely make projection at an arbitrary position in an arbitrary direction and which can be operated by eliminating the danger in advance at the time of determining the optimum position.

### [Means for Solving the Problems]

In order to achieve the object, the video reproducing apparatus of a first aspect of the present invention comprises a radio control signal receiving portion, a video sound data reproducing portion connected to the radio control signal receiving portion, a video projection portion connected to the radio control signal receiving portion and the video sound data reproducing portion, speakers connected to the video sound data reproducing portion, a housing for accommodating the video sound data reproducing portion, the video projection portion, and the speakers, and a housing drive portion for moving the housing, drives the housing according to a control signal of the housing drive portion which controls the housing drive portion and which is received by the radio control signal receiving portion, projects the video sound data onto the video projection portion according to a control signal of the video sound data reproducing portion at an arbitrary position, and reproduces the data through the speakers.

In addition, the housing is characterized by comprising a head portion on which the video projection portion and the lens are mounted, a frame portion for mounting the video sound data reproducing portion, the speakers, and the housing drive portion to rotatably load the head portion, long axis right and left arm portions arm portions one of which is pivotably fixed to both side surfaces of the frame portion and the other portion of which has a drive wheel, and a foot portion which is drivably arranged immediately beneath the frame portion and has the drive wheel at the bottom thereof.

Furthermore, the right and left arm portions arm portions are characterized by comprising a left arm portion which is provided on the left side surface of the frame portion and rotational to the housing portion and a right arm portion provided on the right side surface of the frame portion, and in that the left arm portion is coupled to a left arm drive portion and the right arm portion is coupled to a right arm drive portion.

Subsequently, the head portion on which the video projection portion and the lens are mounted is characterized by being so constructed that the elevation angle of the lens can be adjusted.

On top of that, the video sound data reproducing portion is characterized by being further connected to an FM transmitting portion and capable of transmitting a sound signal as an FM wave.

Meanwhile, the video projection portion is characterized by being connected to a charger through a switching regulator.

In addition, the head portion is characterized by stopping the video projection by means of the video projection portion when a human detection sensor is arranged in the vicinity of the lens and a human body gets close thereto.

Moreover, the human detection sensor is characterized by comprising an operation condition setting portion for generating a one-shot signal, an ultrasonic signal oscillating portion, an ultrasonic sound transmitting portion, an ultrasonic sound receiving portion, and a waveform shaping portion to detect a reflected wave to a transmitted ultrasonic signal.

Subsequently, the right and left arm portions arm portions are characterized in that obstacle sensors are provided at the outer lowermost end portions and stops the drive of the drive wheel to the traveling direction if the obstacle sensors detect an obstacle in the traveling direction thereof.

On top of that, the obstacle sensors are characterized in that a plurality of infrared reflection type sensors are connected in parallel to detect an obstacle.

Meanwhile, the foot portion is characterized by having the obstacle sensor at the outer lowermost end portion and stopping the drive of the drive wheel to the traveling direction if the obstacle sensor detects an obstacle in the traveling direction thereof.

In addition, the obstacle sensor of the foot portion is characterized in that a plurality of infrared reflection type sensors are connected in parallel to detect an obstacle.

Moreover, the right and left arm portions are characterized in that a pinch sensor is provided on the surface facing the side surface of the housing and the drive of the right and left arm portions to the direction of the housing is stopped if the pinch sensor detects an obstacle when the right and left arm portions are driven to the direction of the housing.

Subsequently, the pinch sensor is characterized by comprising tactile switches and a timer circuit.

On top of that, the left arm drive portion and the right arm drive portion are characterized by being connected to a synchronization control unit for synchronizing and driving the drive angles thereof with each other.

Meanwhile, the synchronization control unit is characterized by comprising a left arm variable resistor coupled to the left arm drive portion and a right arm variable resistor coupled to the right arm drive portion to feedback the potentials of the both variable resistors to each drive portion as differential information on a rotation angle.

### [Effects of the Invention]

The video reproducing apparatus according to claim 1 of the present invention comprises the radio control signal receiving portion, the video sound data reproducing portion connected to the radio control signal receiving portion, the video projection portion connected to the radio control signal receiving portion and the video sound data reproducing portion, the speakers connected to the video sound data reproducing portion, the housing for accommodating the video sound data reproducing portion, the video projection portion, and the speakers, and the housing drive portion for moving the housing, and drives the housing according to the control signal of the housing drive portion which controls the housing drive portion and which is received by the radio control signal receiving portion, projects the video sound data onto the video projection portion according to the control signal of the video sound data reproducing portion at an arbitrary position, and reproduces the data through the speakers, thereby enabling video reproduction and video display to be integrated into one and to be freely projected at an arbitrary position in an arbitrary direction.

In addition, in the video reproducing apparatus according to claim 2 of the present invention, the housing is characterized by comprising the head portion on which the video projection portion and the lens are mounted, the frame portion for mounting the video sound data reproducing portion, the speakers, and the housing drive portion to rotatably load the head portion, the long axis right and left arm portions one of which is pivotably fixed to the both side surfaces of the frame portion and the other portion of which has the drive wheel, and the foot portion which is drivably arranged immediately beneath the frame portion and has the drive wheel at the bottom thereof, thereby enabling the video reproduction and the video display to be integrated into one and to be freely projected under a more precise control at an arbitrary position in an arbitrary direction.

Furthermore, in the video reproducing apparatus according to claim 3 of the present invention, the right and left arm portions are characterized by comprising the left arm portion which is provided on the left side surface of the frame portion and rotational to the housing portion and the right arm portion provided on the right side surface of the frame portion, and in that the left arm portion is coupled to the left arm drive portion and the right arm portion is coupled to the right arm drive portion, thereby enabling the more precise control.

Subsequently, in the video reproducing apparatus according to claim 4 of the present invention, the head portion on which the video projection portion and the lens are mounted is characterized by being constructed so that the elevation angle of the lens can be adjusted, thereby enabling the fine adjustment of a projection angle.

In addition, in the video reproducing apparatus according to claim 5 of the present invention, the video sound data reproducing portion is characterized by being further connected to the FM transmitter and capable of transmitting the sound signal as the FM wave, thereby enabling the sound to be reproduced with an external FM tuner.

Meanwhile, in the video reproducing apparatus according to claim 6 of the present invention, the video projection portion is characterized by being connected to the charger through the switching regulator, thereby enabling commercial power supply to be converted into a DC power supply for effective utilization.

In addition, in the video reproducing apparatus according to claim 7 of the present invention, the head portion is characterized by stopping the video projection by means of the video projection portion when the human detection sensor is arranged in the vicinity of the lens and the human body gets close thereto, whereby infants or the like look through a light source by accident to have injury to the eyes can be prevented and the safety in using the video reproducing apparatus of the present invention can be improved.

Moreover, in the video reproducing apparatus according to claim 8 of the present invention, the human detection sensor is characterized by comprising the operation condition setting portion for generating the one-shot signal, the ultrasonic signal oscillating portion, the ultrasonic sound transmitting portion, the ultrasonic sound receiving portion, and the waveform shaping portion to detect the reflected wave to the transmitted ultrasonic signal, thereby providing the effect similar to that of claim 7.

Subsequently, in the video reproducing apparatus according to claim 9 of the present invention, the right and left arm portions are characterized in that the obstacle sensors are provided at the outer lowermost end portions and stops the drive of the drive wheel to the traveling direction if the obstacle sensors detect the obstacle in the traveling direction thereof, whereby the right and left arm portions can be prevented from being further driven before interference with the obstacle and the safety can be improved.

In addition, in the video reproducing apparatus according to claim 10 of the present invention, the obstacle sensor is characterized in that the plurality of infrared reflection type sensors are connected in parallel to detect the obstacle, thereby providing the effect similar to that of claim 9.

Meanwhile, in the video reproducing apparatus according to claim 11 of the present invention, the foot portion is characterized in that the obstacle sensor is provided at the outer lowermost end portion and the drive of the drive wheel to the traveling direction is stopped if the obstacle sensor detects the obstacle in the traveling direction thereof, whereby the foot portion can be prevented from interference with the obstacle.

In addition, in the video reproducing apparatus according to claim 12 of the present invention, the obstacle sensor is characterized in that the plurality of infrared reflection type sensors are connected in parallel to detect the obstacle, thereby providing the effect similar to that of claim 11.

Moreover, in the video reproducing apparatus according to claim 13 of the present invention, the right and left arm portions are characterized in that the pinch sensor is provided on the surface facing the side surface of the housing and the drive of the right and left arm portions to the direction of the housing is stopped if the pinch sensor detects the obstacle when the right and left arm portions are driven to the direction of the housing, whereby the right and left arm portions can be prevented from being further driven when the obstacle is pinched and the safety can be improved.

Subsequently, in the video reproducing apparatus according to claim 14 of the present invention, the pinch sensor is characterized by comprising the tactile switches and the timer circuit, thereby providing the effect similar to that of claim 13.

On top of that, in the video reproducing apparatus according to claim 15 of the present invention, the left arm drive portion and the right arm drive portion are characterized by being connected to the synchronization control unit for synchronizing and driving the drive angles thereof with each other, thereby enabling proper straight drive.

Meanwhile, in the video reproducing apparatus according to claim 16 of the present invention, the synchronization control unit is characterized by comprising the left arm potentiometer coupled to the left arm drive portion and the right arm potentiometer coupled to the right arm drive portion to feedback the differential information on the rotation angles of the both potentiometers to each drive portion, thereby providing the effect similar to that of claim 15.

### Brief Descriptions Of Drawings

FIG. 1 shows the entire circuit diagram of a first embodiment in the video reproducing apparatus according to the present invention;
FIG. 2 shows the entire configuration diagram of a first embodiment in the video reproducing apparatus according to the present invention;
FIG. 3 shows a block diagram of a motor drive portion of a first embodiment in the video reproducing apparatus according to the present invention;
FIG. 4 shows the entire circuit diagram of a second embodiment in the video reproducing apparatus according to the present invention;
FIG. 5 shows an enlarged view of a head portion of a second embodiment in the video reproducing apparatus according to the present invention;
FIG. 6 shows a circuit diagram of a viewing sensor of a second embodiment in the video reproducing apparatus according to the present invention;
FIG. 7 shows the entire circuit diagram of a third embodiment in the video reproducing apparatus according to the present invention;
FIG. 8 shows an enlarged view of a foot portion of a third embodiment in the video reproducing apparatus according to the present invention;

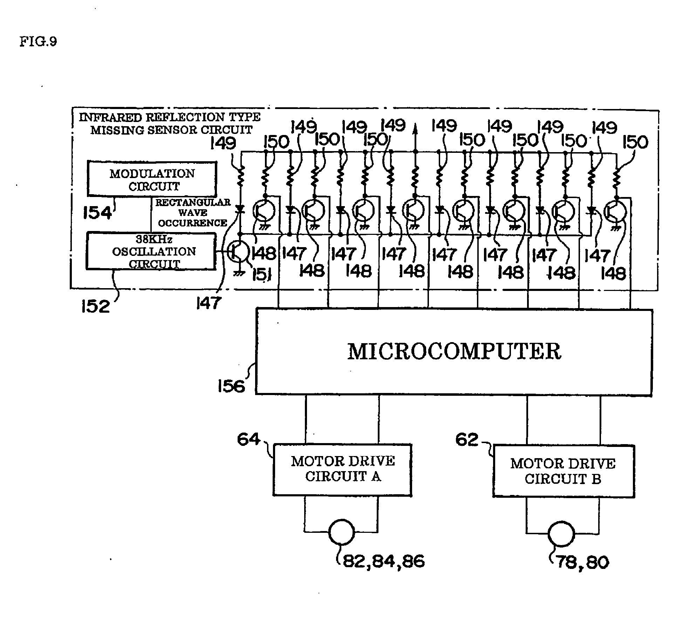

FIG. 9 shows a diagram of a fall prevention circuit of a third embodiment in the video reproducing apparatus according to the present invention;
FIG. 10 shows the entire circuit diagram of a fourth embodiment in the video reproducing apparatus according to the present invention;
FIG. 11 shows an enlarged view of a torso portion of a fourth embodiment in the video reproducing apparatus according to the present invention;
FIG. 12 shows a diagram of a pinch prevention circuit of a fourth embodiment in the video reproducing apparatus according to the present invention;
FIG. 13 shows the entire circuit diagram of a fifth embodiment in the video reproducing apparatus according to the present invention;
FIG. 14 shows an enlarged view of arm portions of a fifth embodiment in the video reproducing apparatus according to the present invention; and
FIG. 15 shows a diagram of a both shoulders synchronization circuit of a fifth embodiment in the video reproducing apparatus according to the present invention.

### Best Mode For Carrying Out The Invention

The preferred embodiment of the present invention will now be described in detail with reference to the drawings.

### [First Embodiment]

The video reproducing apparatus according to a first embodiment of the present invention is a robot type video reproducing apparatus driven by a radio (including radio wave and infrared systems) transmitter by which the direction and elevation angle of a robot body head portion can be controlled. The video reproducing apparatus further mounts a video display portion of a video projector or the like and a video/audio reproducing apparatus for a DVD, CD player, MP4, or the like, further has an input interface on the video/audio from outside, and is also capable of performing the input switching thereof and apparatus control by the transmitter.

With the configuration, the user can move the video reproducing apparatus according to the present invention to an arbitrary position in the living room, display the reproduced video of the video/audio reproducing apparatus as a screen previously installed in an arbitrary position including wall or ceiling from the position and also reproduce an audio signal. A reproducing medium of the video and audio is capable of reproducing a video signal including a game using an RCA jack in addition to a DVD, a CD, and an MP play which are incorporated therein, an S-Video signal which is a high image quality video signal, an RGB signal which is a video signal of a PC or the like, and an HDMI signal provided in a digital audio.

### (Configuration)

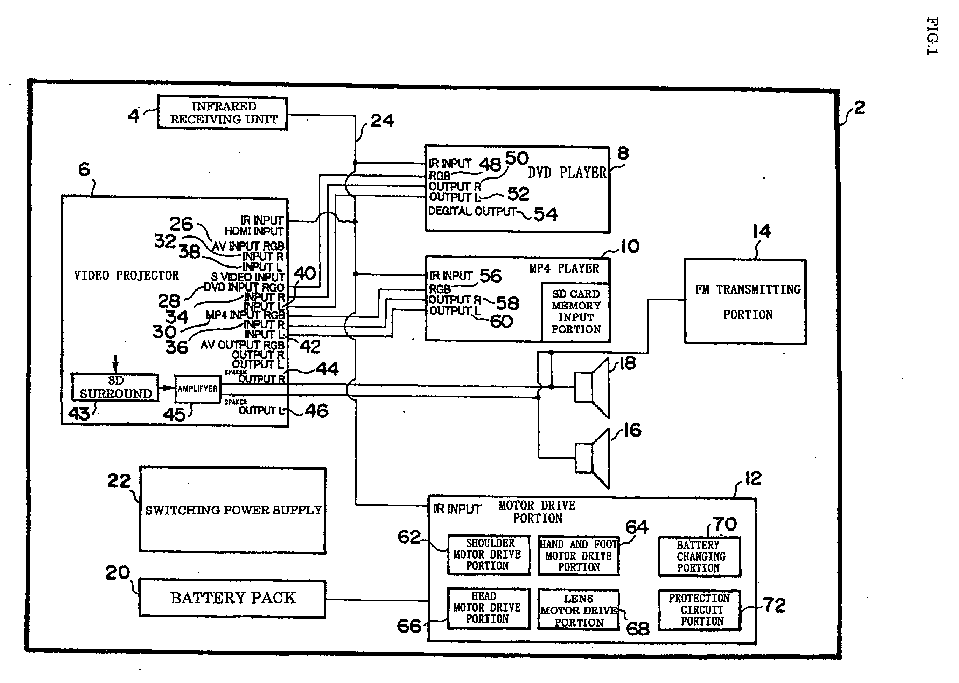

Fig. 1 shows a block diagram of the first embodiment of the video reproducing apparatus according to the present invention.

In a video/audio reproducing apparatus 2, a video projector 6 which is a video projecting portion for converting a video signal into projection light, a DVD/CD player 8 which is a video audio data reproducing portion for reproducing a video medium of a DVD or a CD format, an MP4 player 10 which is similarly the video audio data reproducing portion for reproducing the video of an MPEG 4 (Moving Picture Expert Group 4) format, and a motor drive control unit 12 for moving and operating the video reproducing apparatus 2 are connected to an infrared signal receiving unit 4 which is a radio control signal receiving portion for receiving an infrared control signal to deliver the control signal to other blocks. Furthermore, wiring to speakers 16 and 18 for reproducing the audio and an FM transmitting portion 14 for transmitting an audio signal through a VHF band as an FM wave are electrically connected to the DVD/CD player 8.

In addition, a battery pack 20 as a power supply is connected to the motor drive control unit 12. Moreover, a switching power supply portion 22 which is the power supply of the whole block, particularly of the video projector 6 is connected to all blocks.

The infrared signal receiving unit 4 comprises a light receiving portion for receiving infrared radiation from an infrared transmitter, a demodulation portion for demodulating the received infrared radiation to acquire an identification code, a storage portion for previously storing the identification code, and a control signal generating portion for generating an instruction signal from the previously-stored identification code and the demodulated identification code to other blocks.

The infrared signal receiving unit 4 is connected to bus wiring 24 as an instruction signal line.

The video projector 6 has an instruction signal receiving portion for receiving the instruction signal from the infrared signal receiving unit 4, a power supply control portion for controlling a power supply, and a signal processing control portion for controlling a video signal. The infrared signal receiving unit 4 is connected to the power supply control and signal processing control portions, and the DVD/CD player 8 and the MP4 player 10 are connected to the signal processing control portion. The power supply control portion controls the power supply of the signal processing control portion and a lamp power supply for projection backlight source lamp. The signal processing control portion separates an analog composite signal into a luminance signal and a chrominance signal through a Y/C separation circuit and converts them into the RGB (Red Green Blue) signal through a video decoder, which is then converted into projection data. On the other hand, when an HDMI (High-Definition Multimedia Interface: Trade Mark) signal is available, the signal processing control portion outputs the signal to a liquid crystal display or an audio reproducing apparatus. When an S-Video signal is inputted to a S-Video terminal, the signal processing control portion also outputs it to the liquid crystal display or the audio reproducing apparatus. When the RGB signal is supplied to an AV INPUT RGB terminal, the signal processing control portion also outputs the signal to the liquid crystal display or the audio reproducing apparatus. The signal processing control portion performs a switching control so that a signal can be divided into the DVD/DC player 8 and the MP4 player 10 and outputted

The video projector 6 is provided with VIDEO signal input terminals 26, 28, and 30 for coupling RCA pin plugs coupled to the video reproducing apparatus such as the DVD/CD player 8 or the MP4 player 10, an HDMI input terminal, R audio input terminals, INPUT R32, 34, and 36 which are coupled to the audio reproducing apparatus such as the DVD/CD player 8 or the MP4 player 10, L audio input terminals 38, 40, and 42 which are coupled to the audio reproducing apparatus such as the DVD/CD player 8 or the MP4 player 10, an R speaker terminal 44, and an L speaker terminal 46. In addition, the video projector 6 is also connected to the bus wiring 24. The video projector 6 is provided with a housing on the outside thereof and in the inside thereof, a projection lamp, a color-separation optical system for color-separating the lamp light, a liquid crystal panel for transmitting the color-separated light to change it into video light, a color composite optical system for composing the color-separated light, a projector lens for increasing the projection light, a signal processing portion which is connected to the VIDEO signal input terminals 26, 28, and 30 to control the liquid crystal panel, a power supply portion for driving them, and a shutter before and behind an air-cooling fan for cooling a microcomputer portion or the projection lamp as necessary and the lens, where the light emitted from the lamp is changed into the projection light by the liquid crystal panel and is projected to the outside of the housing through the projection lens. It should be noted that, for the video, the signals from the VIDEO signal input terminals 26, 28, and 30 are modulated by the signal processing portion to drive the liquid crystal panel.

Furthermore, an audio reproducing apparatus has a 3D surround generating portion 43 and an amplifying portion 45, and makes a connection to speakers 16, 18, and the FM transmitting portion 14 through the R speaker terminal 44 and the L speaker terminal 46.

The DVD/CD player 8 comprises an instruction signal receiving portion for receiving an instruction signal from the infrared receiving unit 4, a disk drive portion for driving and rotating a DVD disk, an optical element portion for reading a digital signal by means of an optical element, a signal processing portion for reading out the read digital signal and extending it complying with the MPEG 2 standard after the processing of demodulation, an error correction, or the like, and an output portion capable of acquiring a moving image video signal and an audio signal by the extending processing. The moving image video signal and audio signal acquired are transmitted to the video projector 6 as the analog composite signal or the HDMI signal.

The DVD/CD player 8 is connected to the bus wiring 24 and comprises a VIDEO signal output terminal 48 for coupling RCA pin plugs, an R audio output terminal OUTPUT R50, an L audio output terminal 52, and an HDMI terminal 54. The VIDEO signal output terminal 48 is coupled to a VIDEO signal input terminal 28 and the R audio input terminal OUTPUT R50 is coupled to the R audio input terminal INPUT R34, the L audio output terminal 52 being coupled to the L audio input terminal 40.

The MP4 player 10 comprises an instruction signal receiving portion for receiving the instruction signal from the infrared signal receiving unit 4, a memory card reading portion capable of reading a memory card in which MP4 data is stored, a signal processing portion for reading the read digital signal and extending it complying with the MPEG-4 standard after the processing of demodulation or an error correction and a video encoder for converting an acquired moving image video signal and an audio signal into an analog composite signal or an HDMI signal.

The MP4 player 10 is connected to the bus wiring 24 and comprises a VIDEO signal output terminal 56 for coupling the RCA pin plugs, an R audio input terminal OUTPUT R 58, and an L audio output terminal 60. A VIDEO signal output terminal MP4 INPUTRGB 30 is coupled to a VIDEO signal input terminal 56 and the R audio output terminal OUTPUT R58 is coupled to the R audio input terminal INPUT R36, the L audio output terminal 60 being connected to an L audio input terminal 42.

The motor drive control unit 12 comprises a shoulder motor drive portion 62 for allowing the arm portions of the video reproducing apparatus to move rotationally around the shoulder shaft, a hand and foot motor drive portion 64 for driving wheels provided at the ends of hand and foot portions, a head motor drive portion 66 for allowing the head portion to move rotationally around its center, a lens motor drive portion 68 for determining the projection angle of a lamp of the video projector mounted on the head portion thereof, a battery charging portion 70 for charging the battery pack 20, and a protection circuit portion 72 for detecting the overcharge of the battery charging portion 70 to stop supplying power.

The battery pack 20 is a chargeable and dischargeable storage battery such as a Ni-Cd battery, a Ni-MH battery, or a lithium battery, and acts mainly as a power source for driving the motor drive control unit 12.

The switching power supply 22 comprises a switching regulator, an input voltage detecting sensor, a commercial power code, and a code winder.

The switching regulator is an AC-DC converter and acts mainly as the driving power source of the video projector 6. An input AC voltage ranges from 100 V to 240 V

An input voltage detecting signal generated by the input voltage detecting sensor is transmitted to the motor drive control unit 12. The motor drive control unit 12 locks the operation of the hand and foot motor drive portion 64 upon receiving a signal of the input voltage detecting sensor. This is because the video reproducing apparatus according to the present invention is prevented from moving when the video projector 6 is being supplied with power and is connected to the commercial power supply.

The commercial power code is a windable type code which is preferably high current rating and voltage rating.

The code winder has a winding portion connected to the housing through a flat spiral spring, in which the code is wound with the tension of the flat spiral spring during the winding and the winding portion is locked with a stopper of the winding portion when used. The code winder provides the movement of the video reproducing apparatus 2 according to the present invention to a position suitable for projection and the adjustment of the posture without entirely locking it by radio control, thus making it possible to house the commercial power code at the time of the movement.

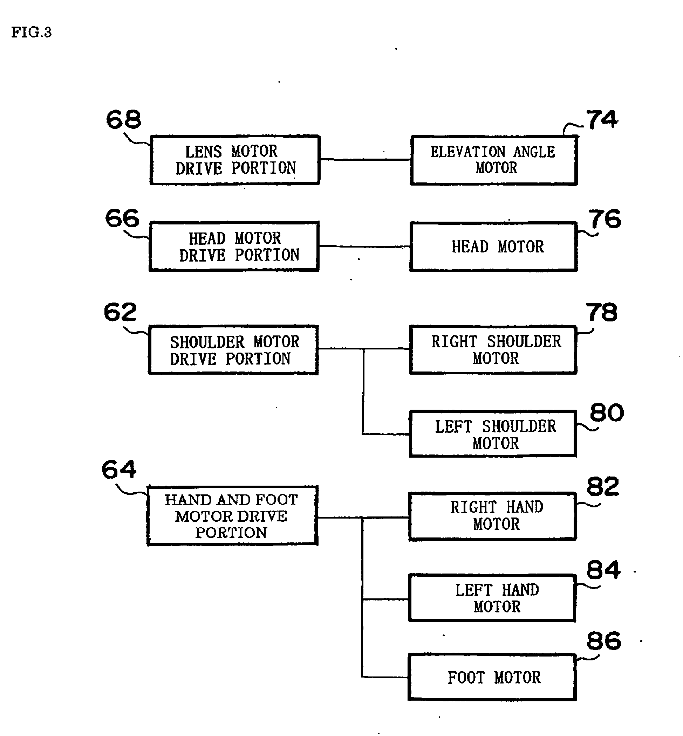

The shoulder motor drive portion 62 comprises a right shoulder motor 78 and a left shoulder motor 80 (Fig. 3) for rotation drive to the horizontal axis of the shoulder portions perpendicular to the travelling direction, and its control unit. The control unit is coupled to the infrared receiving unit 4 for receiving rotation angle control signals of the right shoulder motor 78 and the left shoulder motor 80. Therefore, the control unit operates in accordance with the instruction of the infrared receiving unit 4.

The hand and foot motor drive portion 64 comprises a right hand motor 82 for rotating and driving a right hand wheel 89 (not shown) to an arm portion horizontal axis perpendicular to the travelling direction, a left hand motor 84 for rotating and driving a left hand wheel 91 (not shown) to the arm portion horizontal axis in a similar manner, a foot motor 86 (Fig. 3) for rotating and driving a foot portion 96 to a foot portion horizontal axis perpendicular to the travelling direction, and their control units. The control units are electrically coupled to the infrared receiving unit 4 for receiving their rotation angle control signals, respectively. Therefore, the control units operate in accordance with the instruction of the infrared receiving unit 4.

The head motor drive portion 66 comprises a head motor 76 (Fig. 3) for rotating and driving the head portion around the axis of the torso and its control unit in a similar manner. The control unit is electrically coupled to the infrared receiving unit 4 for receiving an angle control signal of the head motor 76. Therefore, the control unit operates in accordance with the instruction of the infrared receiving unit 4.

The lens motor drive portion 68 comprises an elevation angle motor 74 (Fig. 3) and its control unit in a similar manner. The elevation angle motor 74 is a motor for changing the elevation angle with respect to the horizontal direction to the optical axis of the projection lens of the video projector 6. The control unit is a motor for controlling the angle of the elevation angle motor 74 and is electrically coupled to the infrared receiving unit 4 for receiving angle control information. Therefore, the control unit operates in accordance with the instruction of the infrared receiving unit 4.

The battery charging portion 70 is a power unit for charging the battery pack 20.

The protective circuit 72 is a protective circuit for preventing the overcharge of the battery pack 20 and detects an overvoltage and an overcurrent to stop the operation.

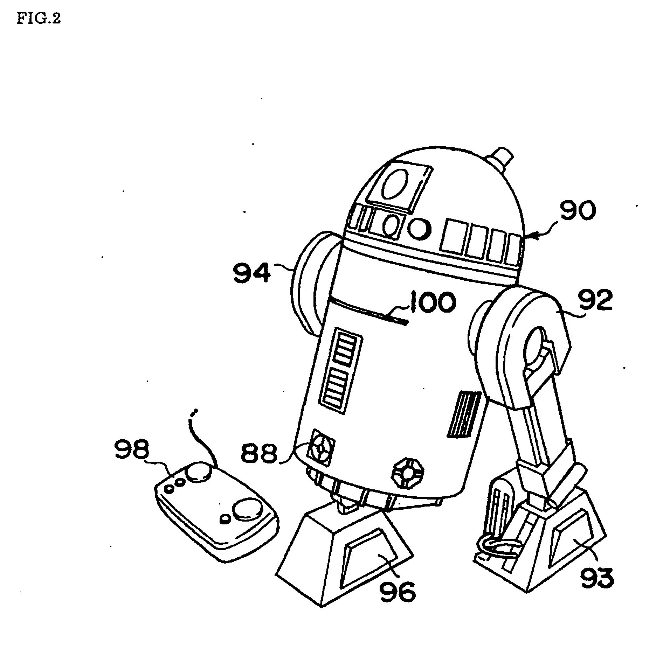

With the configuration described above, in the video reproducing apparatus according to the present invention, a hemispherical head portion 90 including the projection lens is rotatably arranged around the long axis on the upper portion of a torso 88 which is a cylinder-shaped frame portion, as shown in Fig. 2.

The projection lens is arranged so that the projector lens is exposed from an aperture opened to one side of the hemispherical head portion 90 and is set so that the elevation angle can be changed in the vertical direction to the aperture. The elevation angle of the projection lens is controlled by the lens motor drive portion 68.

In addition, the head portion 90 itself is rotatably set at an angle of 360 degrees to the torso 88. The head portion 90 is rotation-controlled by the head motor drive portion 66.

Moreover, rotatable arm portions 92 and 94 are arranged on the horizontal axis of the shoulder portion perpendicular to the torso 88. The arm portions 92 and 94 are driven by the right shoulder motor 78 and the left shoulder motor 80 which are connected to the shoulder motor drive portion 62.

Hand portions 93 and 95 incorporating wheels 89 and 91 (not shown) are provided at the ends of the arm portions 92 and 94. The wheels 89 and 91 are driven by the right hand motor 82 and the left hand motor 84 which are connected to the hand and foot motor drive portion 64.

In addition, the foot portion 96 is arranged at the bottom of the torso 88. The foot portion 96 incorporates a foot wheel 97 (not shown). The foot wheel 97 is driven by the foot motor 86 connected to the hand and foot motor drive portion 64.

At the same time, it is a controller 98 to transmit a control signal to the video reproducing apparatus. The controller 98 comprises control buttons, a control unit, a modulation portion, and a transmission portion, in which operation information inputted from the control buttons is converted into a signal by the control unit and further modulated into a modulated signal by the modulation portion, the modulated signal being amplified and transmitted as a transmission signal by a transmitting portion.

### (Operation)

The operation of the video reproducing apparatus according to the present invention shown in the aforementioned configuration will now be described.

The video reproducing apparatus allows the hand and foot motor drive portion 64 to drive the right hand motor 82 and the left hand motor 84 and the foot motor 86 to drive the wheels 89 and 91 and the foot wheel 97 by using the control signal of the controller 98, thereby enabling the movement to the optimum position for projecting a projection video. In any flatland with no high step height, the video reproducing apparatus is capable of moving freely in the range in which power can be supplied.

After the movement, the head motor 76 is rotated in the direction of a projection sheet arranged on the outside by the control signal of the controller 98 to match the direction in which the projection lens projects and the direction of the projector sheet, which is rotatable in all directions 360 degrees.

Furthermore, the elevation angle with respect to the horizontal direction is changed into the optimum angle to the projection sheet by changing the rotation angle of the elevation angle motor 74 or the right shoulder motor 78 and the left shoulder motor 80 by using the control signal of the controller 98. The angle at which the elevation angle motor 74 moves stays in the range of a fine adjustment, while the elevation angle of the lens can be moved from 0 degree toward the horizontal direction to the vicinity of an elevation angle of 90 degrees at which the arm portions and the torso are substantially horizontal by adjusting the right shoulder motor 78 and the left shoulder motor 80. (DVD/CD)

A DVD disk 102 (not shown) which is to be reproduced is inserted into a DVD/CD insertion slot 100 opened in the center of the torso

In the DVD/CD player 8, the disk drive portion rotates the DVD/CD disk 102, the optical element portion reads a signal on the disk, and the signal processing portion recognizes the DVD/CD disk 102 to go into a standby mode.

When reproduction signals of the DVD/CD disk 102 are transmitted from the controller 98 here, the signal processing portion starts the demodulation of the signal of the DVD/CD disk 102. The demodulated video signal (DVD) and the audio signal (DVD/CD) of the DVD/CD disk 102 are transmitted to the video projector 6.

In the case of the DVD, the video projector 6 transmits the video signal to the signal processing portion, allows the passage of the light emitted from the lamp to the liquid crystal panel controlled by the signal processing portion, changes it into the projection light, and projects it to the projection sheet. Meanwhile, audio signals of the DVD and CD are amplified by the amplification portion 45 after the 3D surround generating portion 43 and reproduced by the speakers 16 and 18. Here, the use of the FM transmitting portion (14) enables the reproduction of the signals by the FM radio. In addition, it is needless to say that the signal from the controller 98 enables a fast-feed, a rewind, a pause, or a halt.

A memory card 106 (not shown) which is to be reproduced is inserted into a memory card insertion slot 104 (not shown) adjacent to the DVD/CD disk insertion slot 100 opened in the center of the torso.

In the MP4 player 10, a memory card read portion, when a reproduction signal of the memory card 106 is transmitted from the controller 98, reads the data and the signal processing portion and a video encoder start the demodulation of signals from a file of the memory card 106. The demodulated video signal and audio signal of the memory card 106 are transmitted to the video projector 6.

The video projector 6 transmits the video signal to the signal processing portion, allows the passage of the light emitted from the lamp to the liquid crystal panel controlled by the signal processing portion, changes it into the projection light, and projects it to the projection sheet. Meanwhile, the audio signal is amplified by the amplification portion 45 after the 3D surround generating portion 43 and is reproduced from the speakers 16 and 18. Here, the use of the FM transmitting portion 14 enables the reproduction of the signal by the FM radio. In addition, it is needless to say that the signal from the controller 98 enables a fast-feed, a rewind, a pause, or a halt.

### [Second Embodiment]

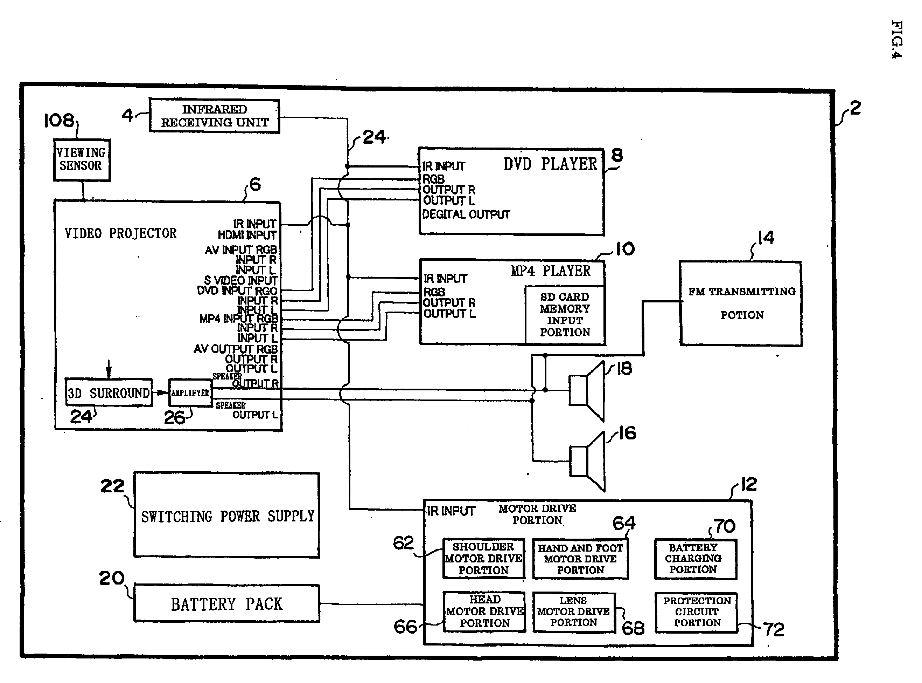

There is shown in Fig. 4 the entire circuit diagram of the video reproducing apparatus 2 having a viewing sensor 108 according to a second embodiment of the present invention. The point of the second embodiment different from the first embodiment will now be described.

Projection light with an exceedingly high luminance is projected to the outside of a housing through a projector lens when a video projector 6 of the video reproducing apparatus 2 according to the present invention operates. In this case, if an infant looks into the projector lens which is substantially as high as the infant's eye level, there is a risk of affecting the eyes. The apparatus is designed to stop the projection when detecting an object in the front of the projector lens and to prevent a disorder of the eyes in case that the object is an infant.

The viewing sensor 108 is connected to the video projector 6 and is composed of a photo reflector comprising a pyroelectric type sensor such as an LiTa 03, a PbTi 03, a TGS, or a PVDF, an LED, and a photo transistor.

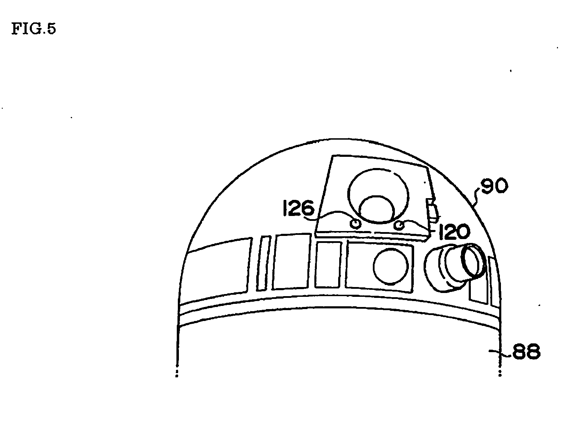

As shown in Fig. 5, the viewing sensor 108 has an ultrasonic resonator 120 and an ultrasonic receptor 126 provided in the peripheral of a lens aperture of the head portion 90, preferably in particular, at the bottom thereof. The viewing sensor 108 arranged is connected to the lens light source of the video projector 6.

More specifically, the apparatus detects a human body in the vicinity of the lens immediately if children look into the lens to stop the emission of the lens light source. The development of ophthalmia to the children who have looked into the lens can be prevented by stopping the emission of the lens light source or the like immediately when the children look into the lens.

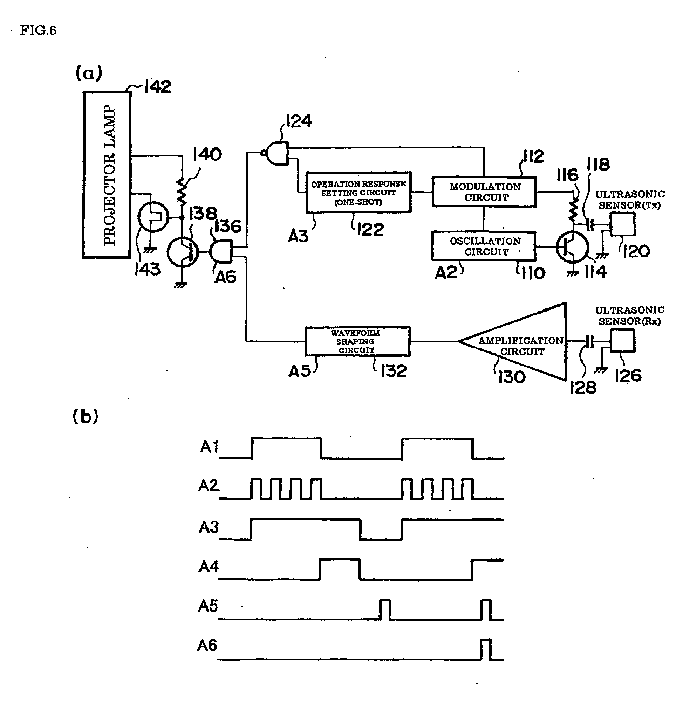

The viewing sensor block diagram of the second embodiment in the video reproducing apparatus 2 according to the present invention is shown in Fig. 6(a). An oscillation circuit 110 for generating ultrasonic sound of 40 kHz is connected to a modulation circuit 112 for generating and modulating a pulse of 1 kHz. The modulation circuit 112 is connected to an ultrasonic radiator 120 through resistance 116 and a capacity 118. When a signal of 1 kHz is inputted to the ultrasonic radiator 120, the ultrasonic radiator 120 oscillates. The oscillation circuit 110 is connected to the capacity 118 through a transistor 114.

Meanwhile, the modulation circuit 112 is also connected to an operating distance setting circuit 122.

The operating distance setting circuit 122 is a one-shot circuit for outputting a High level signal at a predetermined time interval T. The time interval T is a time interval which is set as the time when ultrasonic sound reflects from the ultrasonic radiator 120 by colliding with a mobile object to be measured and reaches an ultrasonic receiver 126 at the sonic speed in air under a room temperature condition. The setting of the time interval T makes it possible to set the longest detection distance. The output of the operating distance setting circuit 122 and the output of the modulation circuit 122 are supplied to a NAND element 124.

The ultrasonic receiver 126 receives the ultrasonic sound reflected by colliding with the mobile object and is connected to an amplification circuit 130 through the capacity 128. The amplification circuit 130 is connected to a NAND element 136 through a waveform shaping circuit 132. An output signal of the NAND element 124 is also inputted to the NAND element 136. The output of the NAND element 136 is connected to a transistor 138 for turning off a projector lamp 142.

More specifically, the circuit configuration is made such that the projector lamp 142 is turned off if ultrasonic in which the output signal of the modulation circuit is at a low level does not oscillate and the ultrasonic can be received when the output of the operating distance setting circuit 122 is at a High level. That is, the reason why the ultrasonic can be received at this timing is that the mobile object reflecting the ultrasonic gets closer to a short distance than the longest detection distance which is to be detected. Thus, the projector lamp 142 is turned off at this point.

The operation of the viewing sensor circuit diagram showing in Fig. 6(a) will now be described with reference to Fig. 6(b). The output of the modulation circuit 112 is A1 in which a signal of 1 kHz is outputted. The period of this signal determines the value of the longest detection distance of an ultrasonic signal.

The output of the oscillation circuit 110 is A2 in which the output of the oscillation circuit takes place only when the output of the modulation circuit is at a High level.

The output of the operating distance setting circuit is shown in an A3 waveform. The duty of an output wave is determined according to the operating distance compared with the modulation circuit 112. Namely, the longest detection distance is 0 when the duty is 50% and the longest detection distance extends as the duty increases.

An output A4 of the NAND element 124 is a detection period signal. Detecting the ultrasonic sound within the detection period indicates that the mobile object approaches within the longest detection distance.

An output A5 of the waveform shaping circuit 132 is the ultrasonic detection waveform of the ultrasonic receiver 126, which detects the ultrasonic sound reflected from the mobile object.

An output A6 of the NAND element 136 is a signal for turning off the projector lamp 142, which is generated only when the mobile object approaches within the longest detection distance and the ultrasonic receiver 126 detects the ultrasonic signal.

With the operation described above, the projector lamp 142 is turned off when a mobile object approaches, specifically, infants or the like approaches the projector lamp in an attempt to look through it.

### [Third Embodiment]

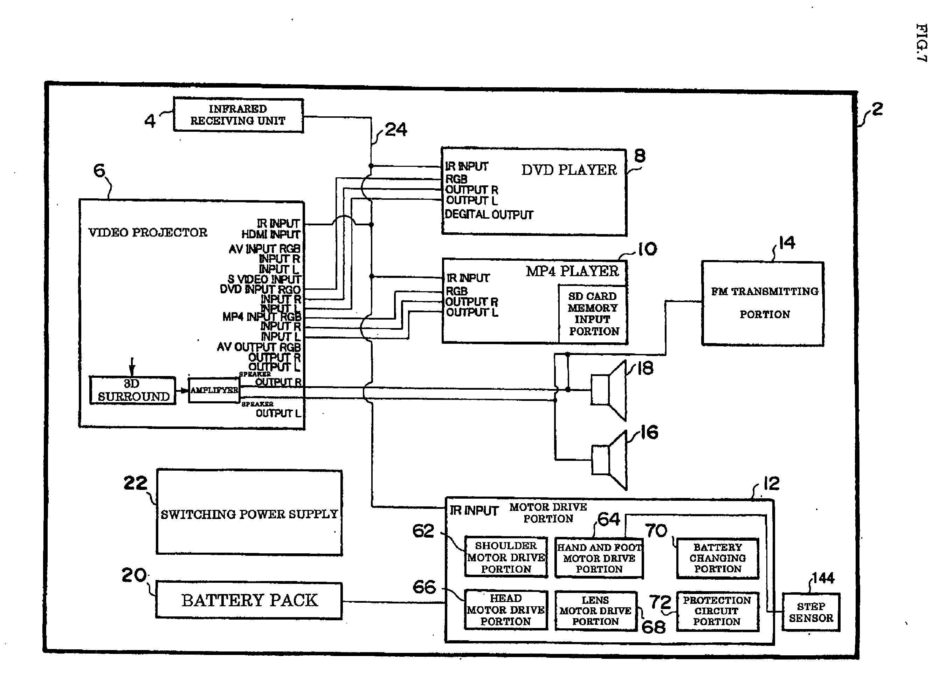

There is shown in Fig. 7 the entire circuit diagram of the video reproducing apparatus 2 having a step sensor 144 according to a third embodiment of the present invention. The points of the third embodiment different from the first embodiment will be described.

Because the video reproducing apparatus 2 according to the present invention has a radio controlled function capable of moving by self propelling, if running a large step-height such as a threshold sill or stairs during the running, it involves a risk of a roll or a fall. If rolling or falling the body, it involves a risk of causing a breakage or injury to the body, the peripheral equipment thereof, or a human body including the user. Hence, it is step sensors 144 to detect a large step-height which is dangerous in advance.

The step sensor 144 is connected to the hand and foot motor drive portion 64 and stops the hand and foot motor immediately if detecting any step-height.

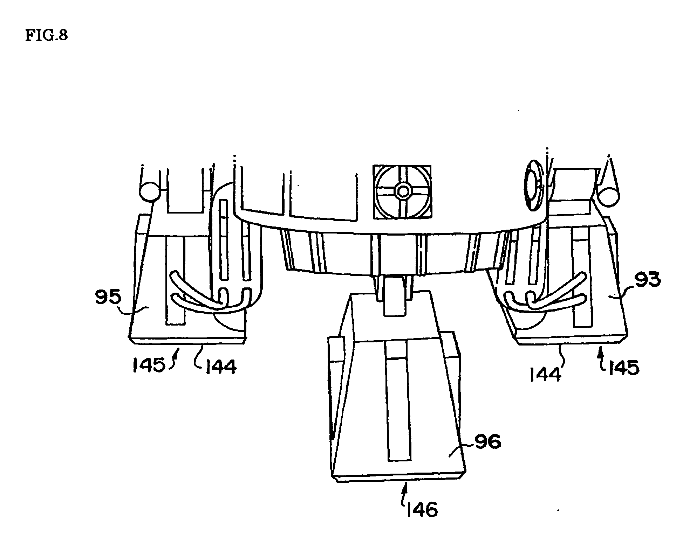

As shown in Fig. 8, the plural step sensors 144 are lined up in parallel along hand tire cover edge portions 145 which are the edges of a tire cover which is not shown in the inside of the hand portions 93 and 95 and a foot tire cover edge portion 146 which is the edge of a tire cover which is not shown in the inside of the foot portion 96.

The step sensors 144 having infrared light-emitting diodes 147 and infrared light receiving elements 148 each of which is arranged toward a floor surface direction detects the case when reflection intensity is increased by a projection higher than the floor surface or the case when the reflection intensity is decreased by a groove portion recessed from the floor surface. The step sensors 144 always measure whether or not there is any reflection of the floor surface, detect a step-height by detecting that large reflection is eliminated, and prevent the video reproducing apparatus 2 from moving to a position having a step-height by forcing a drive only to the direction in which the motors of shoulder portions and arm portions or a foot portion which are detected at that point in time drive to be stopped.

The present invention comprises the plural step sensors 144, drive transistors 150 for driving the step sensors 144, an oscillation circuit 152 for driving the drive transistors 150, a modulation circuit 154 connected to the oscillation circuit 152, a microcomputer 156 for receiving the output of the step sensors 144, a hand and foot motor drive portion 64 and a shoulder motor drive portion 62 which are controlled by the microcomputer 156, a right hand motor 82, a left hand motor 84, and a foot motor 86 which are driven by the hand and foot motor drive portion 64, and a right shoulder motor 78 and a left shoulder motor 80 which are driven by the shoulder motor drive portion 62.

In the step sensors 144, the infrared light receiving elements 148 receive infrared radiation outputted by the infrared light-emitting diodes 147 to change the potential between the infrared light receiving elements 148 and the resistance 149 and 150, whereby the intensity of the infrared light receiving elements 148 are measured. The sensors are provided at the end portion of each direction in which the hand portions 93and 95, and the foot portion 96 travel.

A drive transistor 151 constitutes an amplification circuit for signals to all the infrared light emitting diodes 147 and is driven by the oscillation circuit 152.

The oscillation circuit 152 is an oscillation circuit for an infrared carrier wave, in which an oscillation frequency is preferably from 30 to 50 kHz in order to prevent interference or malfunction due to an infrared control signal for remote control or the like of natural light and other household appliances, and is oscillated at 38 kHz in the present embodiment

The modulation circuit 154 comprises an existing circuit for generating a rectangular wave of an ASK (amplitude shift keying) modulation between 1 and 3 kHz.

The microcomputer 156 comprises an ASK demodulation portion for detecting the potential of the infrared receiving elements 148 and an arithmetic processing portion of a RAM and a ROM.

The ROM stores an ASK demodulation program for digitizing whether or not an ASK signal reflects from the potential of the infrared receiving elements 148 to store it in the ROM by means of an ASK demodulation portion, a step-height judging program for judging the digitized presence or absence of a step-height to output a flag signal indicating the presence or absence of the step-height, and a motor drive restriction program for determining that the flag signal indicating the presence or absence of the step-height from the step-height judging program is included in any portion of the hand portions 93 and 95 and the foot portion 96 and comes from any of the step sensors 144 in any direction, and prohibiting the drive of the motor to the direction in which the determined hand portions or foot portion travel to a specific direction to permit the drive of the motor to the direction in which they recede.

Incidentally, the permission and prohibition of the drive are set not only to the hand portions and foot portion but also to the shoulder portions.

The hand and foot motor drive portion 64 and the shoulder motor drive portion 62 receive signals of the microcomputer 156 to control the right hand motor 82, left hand motor 84, foot motor 86, right shoulder motor 78, and left shoulder motor 80.

Next, the operation according to the present invention will be described.

First, when power is supplied to the video reproducing apparatus 2, the modulation circuit 154 generates an ASK modulation rectangular wave between 1 and 3 kHz.

Furthermore, the rectangular wave is transmitted to the oscillation circuit 152 to oscillate a signal of an oscillation circuit of 38 kHz for driving the drive transistor 151.

The infrared light-emitting diodes 147 connected to the drive transistor 151 are modulated to the ASK modulation rectangular wave between 1 and 3 kHz and a composite wave of the oscillation circuit 38 kHz to emit infrared radiation.

The emitted infrared radiation reflects from the floor surface and is subjected to the light of the infrared receiving elements 148. The result that the infrared receiving elements 148 have received the light is detected as infrared receiving element potential on the VDD side of the infrared receiving elements 148, the infrared receiving element potential being detected by the microcomputer 156 using the ASK modulation portion. The ASK modulation program detects the infrared receiving element potential in the ASK modulation, digitizes the reflection of the ASK modulation signal, and stores the value thereof in the RAM.

Here, the ASK modulation signal is surely detected because of the detection of the floor surface. Thus, the step-height judging program judges that there is no step height.

Moreover, the motor drive restriction program makes no drive restriction because of the judgment that there is no step height.

Subsequently, the case in which there is a step height will be described.

The emitted infrared radiation, if there is a step height, does not reflect from the floor surface and is not subjected to the light of the infrared receiving elements 148. Since the emitted infrared radiation is not subjected to the light thereof, the infrared receiving elements 148 do not detect the infrared receiving element potential on the VDD side of the infrared receiving elements 148 and thus the microcomputer cannot detect the infrared receiving element potential by means of the ASK demodulation portion. The ASK demodulation program makes no detection in the ASK demodulation, cannot digitize the reflection of the ASK modulation signal, and stores it as a 0 value which is in a state of no signal in the RAM.

Here, the ASK modulation signal is not detected because of the detection of the floor surface. Thus, the step-height judging program judges that there is a step height.

Furthermore, the motor drive restriction program makes drive restriction on the drive portion in which the step height has been detected because of the judgment of the presence of the step height. The program stops the drive of the hand portions 93 and 95 or the foot portion 96 which have detected the step height to the side on which the step height has been detected, and also stops, in the case of the hand portions, the rotation of the right shoulder motor 78 or the left shoulder motor 80 under the hand portions to the side on which the step height has been detected.

With the configuration as described above, the control signal of the driving direction at that point in time is stopped, further movement is prevented, and a fall and a roll are prevented.

### [Fourth Embodiment]

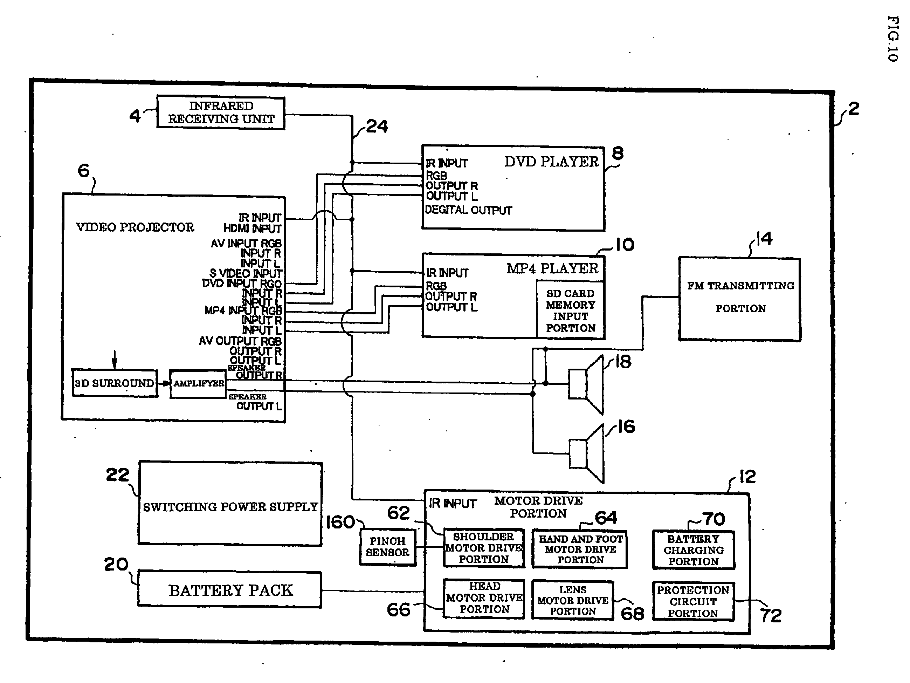

There is shown in Fig. 10 the entire circuit diagram of the video reproducing apparatus 2 having a pinch sensor 160 according to a fourth embodiment of the present invention. The points of the fourth embodiment different from the first embodiment will be described.

The video reproducing apparatus 2 according to the present invention has the arm portions 92 and 94 on both sides of the torso 88 in order to control the elevation angle of the video projector 6. Namely, when the angle of the arm portions 92 and 94 to the torso 88 is changed, the angle of the torso 88 can be changed to adjust the projection angle of the lens on the torso 88, thus providing a wide range of the projection of the video projector 6.

Incidentally, the weight of the torso 88 is heavy, so that the maximum torque between the right shoulder motor 78 and left shoulder motor 80 has to be designed big enough to rotate the arm portions 92 and 94.

Meanwhile, the weight of the torso 88 is heavy and a certain space is left between the arm portions 92 and 94, so that if the angle between the arm portions 92 and 94 and the torso 88 is narrowed, it may involve a risk of pinching the extremities, fingers, hands, or the like of the user or the neck of an infant or the like through the user's negligence. At this time, the pinching can cause injury due to a large torque.

Hence, the fixing of the torso 88 adjacent to the arm portions 92 and 94 is loosened and tactile switches 162 are arranged in a portion adjacent to the arm portions 92 and 94. The operation of the tact switches 162 detects the occurrence of the pinching. In addition, the rotational operation of the arm portions 92 and 94 is forcibly stopped for a certain period of time after the tact switches operate, close and open again. The forced stop allows the injury of a portion in which the pinching has occurred to be avoided.

As shown in the entire circuit diagram of Fig. 10, the pinch sensor 160 is connected to the shoulder motor drive portion 62.

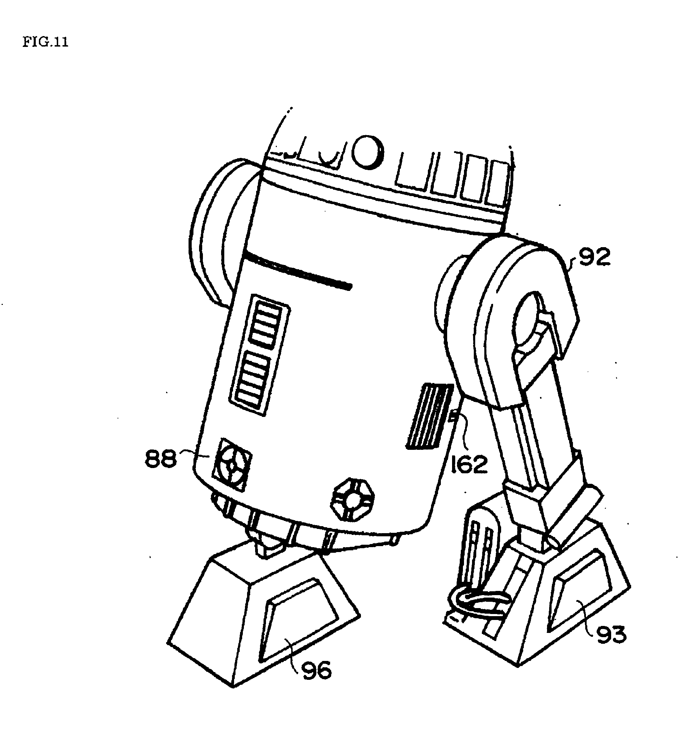

In addition, as shown in Fig. 11, the tactile switches 162 are provided on the side portions of the torso 88. They may be provided on the arm portions 92 and 94.

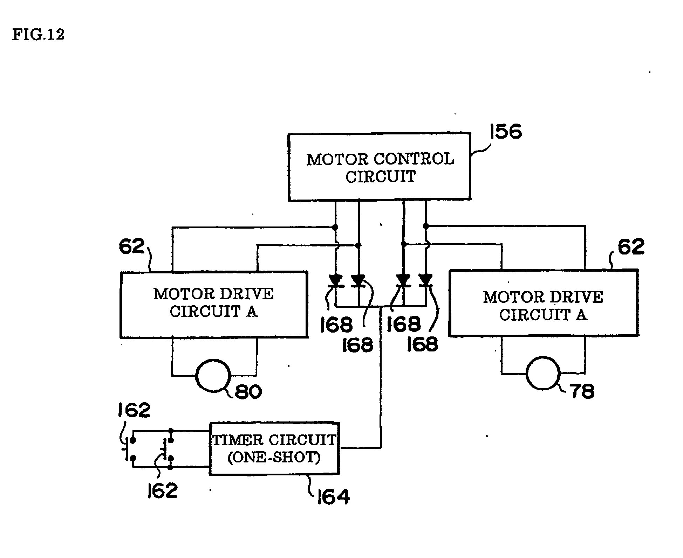

Moreover, a pinch prevention circuit diagram is shown in Fig. 12. The tactile switches 162 are connected to a timer circuit 164. The timer circuit is connected to the motor drive circuit 62 and the microcomputer 156 through diodes 168.

The tactile switches 162 is a switch through which a current flows only while being held down

The timer circuit 164 is a circuit in which the timer starts operating when the tactile switches 162 are inputted and is turned ON after a certain time.

Therefore, once the tactile switches 162 are applied, an OFF signal is transmitted from the timer circuit 164 and the motor drive circuit 62 does not drive the motors 78 and 80 unless a certain time elapses.

The motor drive circuit 62 is a circuit for driving the motors 78 and 80. In addition, the motor drive circuit 62 is connected to the microcomputer 156.

The microcomputer 156 controls the motor drive circuit 62.

### (Operation)

If the tactile switches 162 do not operate, an instruction from the microcomputer 156 is transmitted to the motor drive circuit 62, the motor drive circuit 62 operates, and the motors 78 and 80 operate.

On the other hand, if the tactile switches 162 operate, any object is brought into contact with the tactile switches. Here, the tactile switches 162 are turned ON. Subsequently, the tactile switches 162 trigger the timer circuit 164 to start counting time and to transmit an OFF signal to the microcomputer 156 and the motor drive circuit. With this, the motors 78 and 80 also stop their operation.

Subsequently, when a predetermined certain time elapses, the timer circuit 164 stops counting time to output a starting signal. The starting signal starts up the motor drive circuit 62 and the microcomputer 156. Therefore, the motors 78 and 80 also start their operation.

With the operation described above, the injury of the portion in which the pinching has occurred can be avoided.

### [Fifth Embodiment]

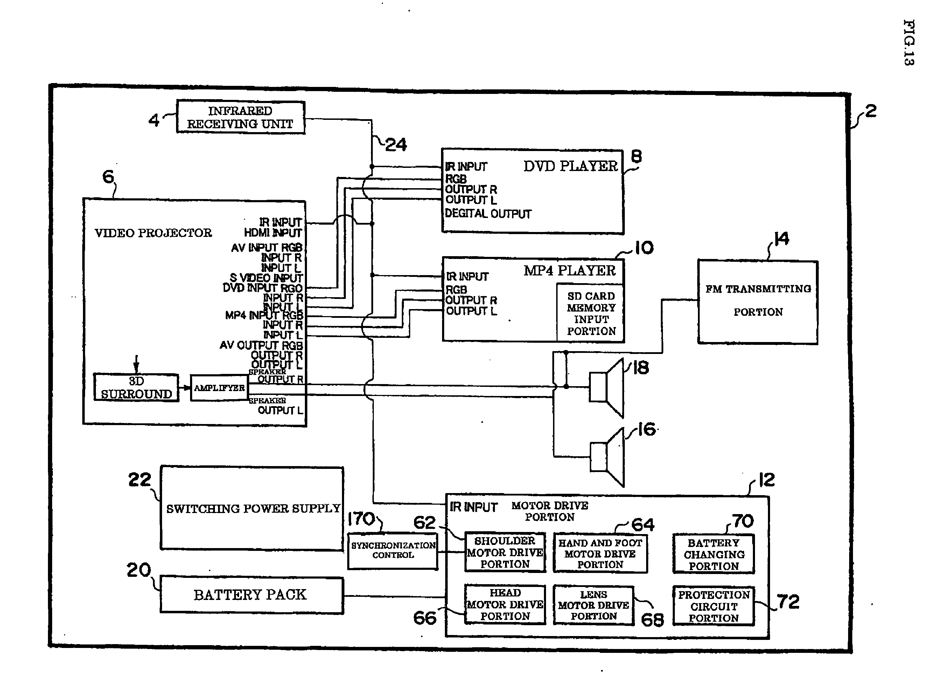

There is shown in Fig. 13 the entire circuit diagram of the video reproducing apparatus 2 having a synchronization control sensor according to a fifth embodiment of the present invention. The points of the fifth embodiment different from the first embodiment will be described.

The video reproducing apparatus 2 according to the present invention has a pair of the arm portions 92 and 94 on both sides of the torso 88 in order to control the elevation angle of the video projector 6, in which the angle of the arm portions 92 and 94 with respect to the torso 88 are changed by the right shoulder motor 78 and the left shoulder motor 80. When the right shoulder motor 78 and the left shoulder motor 80 are unified and driven by one motor on the same shaft here, the arm portions 92 and 94 can be operated in complete synchronization with each other. However, it is necessary to secure enough volume to incorporate a plurality of devices in the torso 88 and is difficult to allow the passage of a rotating shaft through the torso 88. Hence, the two motors control both of the arm portions 92 and 94 without any passage of the rotating shaft according to the present invention.

In this case, even if the same voltage is applied to each motor of the right and left arm portions simultaneously for the same time of period, angular velocity or an angle rate does not have the same magnitude in a strict sense. This is because there is an individual difference in a motor or a gear mechanism. However, if the difference is produced in the rotation angle in this way, deterioration of the levelness of a video of the video projector 6 and a poor balance of the angle of the right and left arm portions 92 and 94 may cause the body to fall down in due time.

Hence, according to the present embodiment, variable resistors are mounted on the motor drive circuits and the same voltage is applied to the variable resistors in order to synchronize the rotation angle of the right and left arm portions, whereby the voltage applied to the both variable resistors is analog-digital converted into digital data and the digital data is continuously compared by the microcomputer to control so that the two arm portions always have the same angle.

As shown in Fig. 13, in the video reproducing apparatus 2 having the synchronization control sensor according to the fifth embodiment of the present invention, a synchronization control circuit 170 is connected to the shoulder motor drive portion 62.

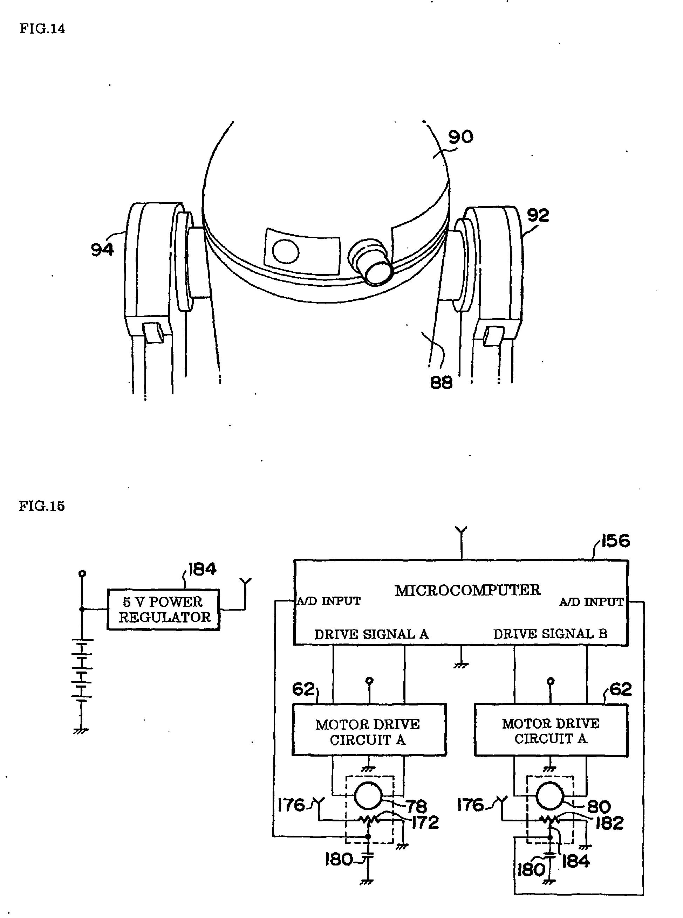

As shown in Fig. 14, the arm portions 92 and 94 need to tilt to the same direction with respect to the torso 88. Specifically, as shown in Fig. 15, a variable resistor 172 is attached to a circumference portion of the outside of a rotation portion of the gear mechanism which is the output of an electric motor to connect both ends of the variable resistor 172 to a power supply portion 176 and a ground 178 and is arranged so that the rotation angle of the gear mechanism and the rotation angle of the variable resistor are matched. Here, the variable resistor 172 has a resistor value varying in proportion to an angle, so that the angle of the gear mechanism is expressed in proportion as the potential difference of the electrode of the variable resistor 172 by applying a constant voltage like the power supply and the ground.

The output of the variable resistor 172 is connected to the input of the analog-digital converter of the microcomputer 156.

Meanwhile, the right shoulder motor 78 and the left shoulder motor 78 are each connected to the shoulder motor drive portion 62 which is connected to the microcomputer

Incidentally, the power supply portion 170needs a correct voltage value and is provided with a 5 V power regulator 184. The power is supplied via the 5 V power regulator 184. In this case, the voltage hardly varies.

### (Operation)

When a signal to instruct rotational movement is transmitted to both of the right shoulder motor 78 and the left shoulder motor 80 by the instruction from the microcomputer 156, the signal is transmitted to the shoulder motor drive portion 62 and the drive voltage is actually applied to the right shoulder motor 78 and the left shoulder motor 80. If the right shoulder motor 78 and the left shoulder motor 80 each begin to rotate here, the gear mechanism provided in each motor rotates simultaneously. The variable resistors 172 and 182 rotate corresponding to the gear mechanisms here. Therefore, the potential of the variable resistors changes and is supplied to the microcomputer 156.

Here, the microcomputer 156 digitizes the potential from the variable resistor 172 and the potential from the variable resistor 182 by means of the analog-digital converter incorporated in the microcomputer 156, respectively to store them in the internal memory. When the digitized potentials are matched, no signal is issued.

Meanwhile, if the right shoulder motor 78 and the left shoulder motor 80 are different in angle by the digitization, the application to any of the motors whose rotation keeps advancing is stopped leaving the voltage to any of the motors whose rotation keeps delaying as a feedback. This operation is repeated until both of the rotation angles are matched.

The angles of the both gear mechanisms can have the same angle by transmitting the control signal for such a correction.

### Industrial Applicability

The video reproducing apparatus according to claim 1 of the present invention comprises the radio control signal receiving portion, the video sound data reproducing portion connected to the radio control signal receiving portion, the video projection portion connected to the radio control signal receiving portion and the video sound data reproducing portion, the speakers connected to the video sound data reproducing portion, the housing for accommodating the video sound data reproducing portion, the video projection portion, and the speakers, and the housing drive portion for moving the housing, and drives the housing according to the control signal of the housing drive portion which controls the housing drive portion and which is received by the radio control signal receiving portion, projects the video sound data onto the video projection portion according to the control signal of the video sound data reproducing portion at an arbitrary position, and reproduces the data through the speakers, thereby enabling video reproduction and video display to be integrated into one and to be freely projected at an arbitrary position in an arbitrary direction.

## Claims

1. A video reproducing apparatus which comprises a radio control signal receiving portion, a video sound data reproducing portion connected to the radio control signal receiving portion, a video projection portion connected to the radio control signal receiving portion and the video sound data reproducing portion, speakers connected to the video sound data reproducing portion, a housing for accommodating the video sound data reproducing portion, the video projection portion, and the speakers, and a housing drive portion for moving the housing, and which drives the housing according to a control signal of the housing drive portion which controls the housing drive portion and which is received by the radio control signal receiving portion, projects the video sound data onto the video projection portion according to a control signal of the video sound data reproducing portion at an arbitrary position, and reproduces the data through the speakers.

2. The video reproducing apparatus according to claim 1, **characterized in that** the housing comprises a head portion on which the video projection portion and the lens are mounted, a frame portion for mounting the video sound data reproducing portion, the speakers, and the housing drive portion to rotatably load the head portion, long axis right and left arm portions one of which is pivotably fixed to both side surfaces of the frame portion and the other portion of which has a drive wheel, and a foot portion which is drivably arranged immediately beneath the frame portion and has the drive wheel at the bottom thereof.

3. The video reproducing apparatus according to claim 2, **characterized in that** the right and left arm portions comprises a left arm portion which is provided on the left side surface of the frame portion and rotational to the housing portion and a right arm portion provided on the right side surface of the frame portion; and
**characterized in that** the left arm portion is coupled to a left arm drive portion and the right arm portion is coupled to a right arm drive portion.

4. The video reproducing apparatus according to claim 2, **characterized in that** the head portion on which the video projection portion and the lens are mounted is so constructed that an elevation angle of the lens can be adjusted.

5. The video reproducing apparatus according to any one of claims 1 to 4, **characterized in that** the video sound data reproducing portion is further connected to an FM transmitting portion and capable of transmitting a sound signal as an FM wave.

6. The video reproducing apparatus according to any one of claims 1 to 5, **characterized in that** the video projection portion is connected to a charger through a switching regulator.

7. The video reproducing apparatus according to any one of claims 2 to 6, **characterized in that**, when a human detection sensor is arranged in the vicinity of the lens and a human body gets close thereto, the head portion stops the video projection by means of the video projection portion.

8. The video reproducing apparatus according to claim 7, **characterized in that** the human detection sensor comprises an operation condition setting portion for generating a one-shot signal, an ultrasonic signal oscillating portion, an ultrasonic sound transmitting portion, an ultrasonic sound receiving portion, and a waveform shaping portion to detect a reflected wave to a transmitted ultrasonic signal.

9. The video reproducing apparatus according to claim 2, **characterized in that** the right and left arm portions have obstacle sensors at the outer lowermost end portions and stops the drive of the drive wheel to the traveling direction if the obstacle sensors detect an obstacle in the traveling direction thereof.

10. The video reproducing apparatus according to claim 9, **characterized in that** the obstacle sensors have a plurality of infrared reflection type sensors connected in parallel to detect an obstacle.

11. The video reproducing apparatus according to claim 2, **characterized in that** the foot portion has an obstacle sensor at the outer lowermost end portion and stops the drive of the drive wheel to the traveling direction if the obstacle sensor detects an obstacle in the traveling direction thereof.

12. The video reproducing apparatus according to claim 11, **characterized in that** the obstacle sensor has a plurality of infrared reflection type sensors connected in parallel to detect an obstacle.

13. The video reproducing apparatus according to claim 2, **characterized in that** the right and left arm portions have a pinch sensor provided on the surface facing the side surface of the housing and stops the drive of the right and left arm portions to the direction of the housing if the pinch sensor detects an obstacle when the right and left arm portions are driven to the direction of the housing.

14. The video reproducing apparatus according to claim 13, **characterized in that** the pinch sensor comprises tactile switches and a timer circuit.

15. The video reproducing apparatus according to claim 3, **characterized in that** the left arm drive portion and the right arm drive portion are connected to a synchronization control unit for synchronizing and driving the drive angles thereof with each other.

16. The video reproducing apparatus according to claim 15, **characterized in that** the synchronization control unit comprises a left arm variable resistor coupled to the left arm drive portion and a right arm variable resistor coupled to the right arm drive portion to feedback the potentials of the both variable resistors to each drive portion as differential information on a rotation angle.
